# EUROPÄISCHE PATENTSCHRIFT

(11) **EP 2 728 314 B1**
(45) Veröffentlichungstag und Bekanntmachung des Hinweises auf die Patenterteilung: **13.09.2017**
(21) Anmeldenummer: 13003336.8
(22) Anmeldetag: 02.07.2013
(51) Int. Cl.: G01D 3/08

(54) **Messanordnung zur Bestimmung einer Messgröße**
Measuring arrangement for determination of a measurement value
Agencement de mesure pour la détermination d'une grandeur de mesure

(30) Priorität: 06.11.2012 DE 102012021794
(43) Veröffentlichungstag der Anmeldung: 07.05.2014
(73) Patentinhaber: Krohne Messtechnik GmbH, 47058 Duisburg (DE)
(72) Erfinder: Pichot, Vincent, 26100 Romans sur Isère (FR)
(74) Vertreter: Gesthuysen Patent- und Rechtsanwälte

(56) Entgegenhaltungen:
- EP-A1- 1 091 199
- EP-A2- 1 588 928
- DE-A1- 10 063 996
- DE-A1-102007 047 309

## Beschreibung

Die Erfindung betrifft eine Messanordnung zur Bestimmung mindestens einer Messgröße mit mindestens einer Sensorvorrichtung und mindestens einer Transmittervorrichtung. Dabei erzeugt die Sensorvorrichtung mindestens ein Messsignal und die Transmittervorrichtung erzeugt mindestens aus dem mindestens einen Messsignal mindestens ein Ausgangssignal. Bei der Messgröße handelt es sich beispielsweise um den Durchfluss, den Füllstand, den pH-Wert oder die Temperatur eines Mediums.

In der modernen Prozessautomatisierung wird eine Vielzahl von Messgeräten zur Bestimmung oder zur Überwachung von Messgrößen eingesetzt, um damit Prozesse zu überwachen oder zu steuern. Handelt es sich insbesondere um gefährliche oder sicherheitskritische Anwendungen, so müssen auch die Messgeräte oder allgemein Messanordnungen ein erhöhtes Maß an Sicherheit erfüllen. Umgekehrt formuliert müssen die Messgeräte ein gewisses Maß an Zuverlässigkeit bieten. Dies wird über die Sicherheitsanforderungsstufe oder den Sicherheits-Integritätslevel (SIL) beschrieben. Dabei muss mit höherer Stufe das Risiko einer Fehlfunktion weiter minimiert werden.

Um Fehlfunktionen zu erkennen, werden daher Messgeräte mit einer Funktionalität ausgestattet, die es erlaubt, dass sie insbesondere sich oder einzelne Komponenten überwachen.
Wird ein Fehler erkannt, so wird dies zum einen - insbesondere über ein Fehlersignal - signalisiert und zum anderen wechseln die Messgeräte - insbesondere bei kritischen Fehlern - in einen abgesicherten Zustand, der es verhindern soll, dass durch das Messgerät in Verbindung mit dem Fehlerzustand ein Unglück geschieht. Aus der DE10 2007 047309 A1 ist eine Vorrichtung zur Bestimmung und/oder Überwachung mindestens einer Prozessgröße bekannt, mit einer Elektronikeinheit, welche über einen Strom-/Spannungseingang mit elektrischer Energie versorgt ist, wobei für das Betreiben der Elektronikeinheit ein minimaler Spannungswert für eine am Strom-/Spannungseingang anliegende Spannung vorgegeben ist, wobei ein Spannungsregler vorgesehen ist, welcher mit einer Feedbackspannung beaufschlagt wird und welcher in dem Fall, dass die Feedbackspannung einen dem Spannungsregler vorgegebenen Spannungsgrenzwert unterschreitet, welcher abhängig von dem für das Betreiben der Elektronikeinheitvorgegebenen minimalen Spannungswert ist, einen Shut-Down der Elektronikeinheit durchführt. Für die weitere Betrachtung werden Messgeräte oder allgemein Messanordnungen in wenigstens eine Sensorvorrichtung und eine Transmittervorrichtung unterteilt. Die Sensorvorrichtung erzeugt ausgehend von einer Messung ein Messsignal, das von der Transmittervorrichtung verarbeitet wird. Die Verarbeitung kann dabei beispielsweise bedeuten, dass in der Transmittervorrichtung Kalibrationsdaten hinterlegt sind, die es erlauben, aus dem Messsignal auf die eigentlich interessierende Messgröße zu schließen. Ist beispielsweise das Messsignal die Laufzeit eines Mikrowellensignals eines Füllstandmessgeräts nach dem Radar-Prinzip, so kann über Referenzdaten auf den Füllstand eines die Mikrowellensignale reflektierenden Mediums geschlossen werden. Ergänzend oder alternativ werden in der Transmittervorrichtung die Messsignale in - meist standardisierte - Daten umgewandelt, die über Feldbusse kommuniziert werden können. Das erzeugte Ausgangssignal ist z. B. ein 4...20 mA-Signal.

Unter einer Messanordnung sei dabei ganz allgemein sowohl ein Messgeräte - alternative Bezeichnung wäre: Feldgerät - als auch eine Zusammenschaltung von separaten Komponenten für eine Messung verstanden.
Neben der Erkennung eines Fehlers ist es auch wichtig, dass die Messanordnung bei einem solchen Fehlerfall auch zuverlässig in einen sicheren Zustand übergeht, d. h. insbesondere in einen Ruhezustand oder einen abgeschalteten Zustand wechselt. Der Erfindung liegt daher die Aufgabe zugrunde, eine Messanordnung vorzuschlagen, die im Fehlerfall in einen gesicherten Zustand übergeht. Die erfindungsgemäße Messanordnung wird durch die Merkmale des Anspruchs 1 definiert. Die erfindungsgemäße Messanordnung, bei der die zuvor hergeleitete und aufgezeigte Aufgabe gelöst ist, ist zunächst und im Wesentlichen dadurch gekennzeichnet, dass die Transmittervorrichtung mindestens eine Steuervorrichtung, mindestens eine Schaltervorrichtung und mindestens eine Signalausgangseinstellvorrichtung aufweist. Die Signalausgangseinstellvorrichtung ist zur Erzeugung des mindestens einen Ausgangssignals ausgestaltet. Die Schaltervorrichtung ist derartig ausgestaltet, dass sich die Schaltervorrichtung mindestens in einem ersten oder in einem zweiten Zustand befindet. Die Steuervorrichtung ist in dem Fall, dass sich die Schaltervorrichtung in dem ersten Zustand befindet, mit der Signalausgangseinstellvorrichtung verbunden. Die Signalausgangseinstellvorrichtung erzeugt in dem Fall, dass sich die Schaltervorrichtung in dem zweiten Zustand befindet und/oder dass die Signalausgangseinstellvorrichtung frei von einer Verbindung mit der Steuervorrichtung ist, mindestens ein Fehlersignal als Ausgangssignal. Die Steuervorrichtung wirkt zudem auf die Energieversorgung der Sensorvorrichtung ein und die Sensorvorrichtung wirkt auf die Schaltervorrichtung ein. Die Sensorvorrichtung hält in dem Fall, dass die Sensorvorrichtung mit Energie oberhalb eines vorgebbaren Minimalwerts versorgt ist, die Schaltervorrichtung in dem ersten Zustand. Schließlich setzt die Steuervorrichtung in dem Fall, dass die Steuervorrichtung das Vorliegen eines Fehlerzustands erkennt, zumindest die Energieversorgung der Sensorvorrichtung auf einen vorgebbaren Grenzwert herab. In einer Ausgestaltung erzeugt die Steuervorrichtung in dem Fall, dass sie das Vorliegen eines Fehlerzustands erkennt, über die Signalausgangseinstellvorrichtung ein Fehlersignal als Ausgangssignal und setzt die Energieversorgung der Sensorvorrichtung auf einen vorgebbaren Grenzwert herab.

Die Messanordnung teilt sich auf in wenigstens eine Sensorvorrichtung und eine Transmittervorrichtung, die für die Verarbeitung, Umwandlung, Aufbereitung usw. der Messsignale der Sensorvorrichtung ausgestaltet ist und die ein Ausgangssignal erzeugt, das beispielsweise über eine Feldbusschnittstelle als Beispiel für eine beliebig ausgestaltete Schnittstelle an weitere Einheiten oder z. B eine Leitwarte übertragen wird. In der Transmittervorrichtung befindet sich eine Schaltervorrichtung, die - im fehlerfreien Zustand und in dem Fall, dass die Sensorvorrichtung mit ausreichend Energie versorgt ist - durch die Sensorvorrichtung in einem Zustand gehalten wird, in dem eine Verbindung zwischen der Steuervorrichtung und der Signalausgangseinstellvorrichtung besteht, so dass die Steuervorrichtung hierüber die Erzeugung des Ausgangssignals steuert und umgekehrt die Steuervorrichtung mit Energie versorgt wird.

In einer Ausgestaltung sind insbesondere die Steuervorrichtung, die Schaltervorrichtung und die Signalausgangseinstellvorrichtung in Serie geschaltet. Dabei ist in einer weiteren Ausgestaltung wenigstens in Bezug auf die Energieversorgung die Sensorvorrichtung ebenfalls in Serie hinter der Steuervorrichtung angeordnet bzw. generell so angeordnet, dass eine Unterbrechung der Energieversorgung der Steuervorrichtung auch zu einer Unterbrechung der Energieversorgung der Sensorvorrichtung führt.

Ist die Schaltervorrichtung in einem Zustand, in dem die Verbindung zwischen der Steuervorrichtung und der Signalausgangseinstellvorrichtung unterbrochen ist, so ist zum einen die angesprochene Energieversorgung der Steuervorrichtung unterbrochen und zum anderen erkennt dies die Signalausgangseinstellvorrichtung und erzeugt ein Fehlersignal als Ausgangssignal.

Die Schaltervorrichtung wird durch die Sensorvorrichtung in dem Zustand gehalten, dass die Steuervorrichtung Kontakt mit der Signalausgangseinstellvorrichtung hat. Ohne die Einwirkung der Sensorvorrichtung begibt sich die Schaltervorrichtung von selbst in den Zustand, in dem der Kontakt unterbrochen ist. Daher führt der Fall, dass die Energieversorgung der Sensorvorrichtung unter einen Minimalwert fällt oder gänzlich aufgehoben wird, dazu, dass auch die Energieversorgung der Steuervorrichtung ausfällt.

Erkennt die Steuervorrichtung das Vorliegen eines Fehlerzustands, erzeugt sie in einer Ausgestaltung über die Signalausgangseinstellvorrichtung ein Fehlersignal als Ausgangssignal und wirkt insbesondere auf die Energieversorgung der Sensorvorrichtung ein. In einer Ausgestaltung unterbricht sie sogar die Energieversorgung der Sensorvorrichtung. In einer weiteren Ausgestaltung wird von der Steuervorrichtung auch der Sensorvorrichtung übermittelt, dass ein Fehlerzustand entdeckt worden ist. Sinkt die zur Verfügung stehende Energie herab, so wirkt die Sensorvorrichtung nicht mehr auf die Schaltervorrichtung ein und die Energieversorgung der Steuervorrichtung wird beendet. Alternativ oder ergänzend erkennt die Sensorvorrichtung, insofern ihr von der Steuervorrichtung das Vorliegen eines Fehlerzustands als Information übermittelt worden ist, dass ihre Energieversorgung - in dem Fall, dass ggf. ein weiterer Fehler in der Steuervorrichtung oder in dessen Umfeld vorliegt - nicht passend beschränkt oder beendet wird, und handelt daraus selbsttätig, indem sie wiederum auf die Schaltervorrichtung einwirkt.

Eine Ausgestaltung sieht vor, dass die Sensorvorrichtung in dem Fall, dass die Sensorvorrichtung das Vorliegen eines Fehlerzustands erkennt, die Schaltervorrichtung aus dem ersten in den zweiten Zustand versetzt. Ein solcher Fehlerzustand kann daher auch der Fall sein, dass die Steuervorrichtung nicht richtig auf einen erkannten Fehler reagiert. Durch diese Ausgestaltung gibt es neben der Steuervorrichtung noch eine zweite Komponente der Messanordnung, die nach Fehlerzuständen Ausschau hält und die Messanordnung in einen sicheren Zustand überführt. Von der Sensor- und der Steuervorrichtung wird jeweils auf die Schaltervorrichtung eingewirkt und diese wird in einen anderen Zustand umgeschaltet, so dass die Energieversorgung der Steuer- bzw. der Sensorvorrichtung unterbrochen wird.

Die Signalausgangseinstellvorrichtung gibt in einer Ausgestaltung das mindestens eine Ausgangssignal über eine Schnittstelle aus. Dabei handelt es sich in einer Ausgestaltung bei der Schnittstelle, die generell als Datenschnittstelle dient, um eine Feldbusschnittstelle und in einer weiteren Ausgestaltung insbesondere um eine Schnittstelle für 4...20 mA-Signale, so dass über diese Schnittstelle auch die Stromversorgung der Messanordnung erfolgt. Die Schnittstelle kann dabei eine digitale, analoge oder gemischte Datenkommunikation ermöglichen.

In einer Ausgestaltung erfolgt innerhalb der Messanordnung die Energieversorgung der Sensorvorrichtung über die Steuervorrichtung und in einer weiteren Ausgestaltung sogar insbesondere nur über die Steuervorrichtung, so dass der Sensorvorrichtung keine weitere externen Energiequellen zur Verfügung stehen und über die Steuervorrichtung die Sensorvorrichtung zuverlässig in den abgesicherten Zustand ohne Stromversorgung überführt wird.

In einer Ausgestaltung dient die Steuervorrichtung auch dem Empfang des Messsignal bzw. der Messsignale der Sensorvorrichtung. Im Anschluss daran steuert die Steuervorrichtung die Erzeugung des Ausgangssignals durch die Signalausgangseinstellvorrichtung. Hierfür sind beispielsweise Kalibrationsdaten für die Steuervorrichtung oder Referenzdaten abgespeichert.

In einer Ausgestaltung ist die Schaltervorrichtung derartig ausgestaltet, dass sich die Schaltervorrichtung in einem geschlossenen als ersten Zustand oder in einem geöffneten als zweiten Zustand befindet. Die Schaltervorrichtung ist also im Wesentlichen in dieser Ausgestaltung ein Schalter, der entweder geöffnet oder geschlossen ist. Vorzugsweise befindet sich die Schaltervorrichtung dabei in einem normalen Fall in einem geöffneten Zustand, d. h. die Schaltervorrichtung ist im Allgemeinen geöffnet und ist nur durch ein spezielles Einwirken auf sie geschlossen.

In einer Ausgestaltung ist vorgesehen, dass die Steuervorrichtung mindestens einen Fehlertest durchführt und mindestens ein Ergebnis des mindestens einen Fehlertest an die Sensorvorrichtung übermittelt. Die Steuervorrichtung überprüft in dieser Ausgestaltung sich selbst oder den Anschluss an bzw. die Kommunikation mit der Peripherie. Das Ergebnis oder in einer weiteren Ausgestaltung die Ergebnisse von weiteren Fehler- bzw. ggf. Selbsttests überträgt die Steuervorrichtung an die Sensorvorrichtung. Somit ist insbesondere die Sensorvorrichtung auch derartig ausgestaltet, dass sie solche Ergebnisse auswerten und ggf. mit Referenzwerten vergleichen kann und dass sie insbesondere ausgehend von dieser Betrachtung der Ergebnisse der Fehlertests reagiert.

In einer Ausgestaltung hält im Normalfall, dass die Sensorvorrichtung mit - zumindest ausreichend - Energie (also oberhalb eines vorgebbaren Minimalwerts) versorgt ist, die Sensorvorrichtung die Schaltervorrichtung im ersten Zustand. Da die Schaltervorrichtung im ersten Zustand die Verbindung zwischen der Steuervorrichtung und der Signalausgangseinstellvorrichtung ermöglicht, wird daher in dieser Ausgestaltung auch die Energieversorgung der Steuervorrichtung und der Sensorvorrichtung durch dieses Verhalten der Sensorvorrichtung sichergestellt. Damit geht einher, dass in dem Fall, dass die Sensorvorrichtung nicht oder nicht ausreichend mit Energie versorgt wird, die Sensorvorrichtung nicht mehr in der Lage ist, die Schaltervorrichtung im ersten Zustand zu halten, so dass die Schaltervorrichtung insbesondere in ihren natürlichen Zustand, d. h. den zweiten Zustand übergeht.

In einer Ausgestaltung unterbricht die Steuervorrichtung in dem Fall, dass sie das Vorliegen eines Fehlerzustands erkennt, die Energieversorgung der Sensorvorrichtung. Die Energieversorgung wird daher auf Null reduziert.

Im Einzelnen gibt es eine Vielzahl von Möglichkeiten, die erfindungsgemäße Messanordnung auszugestalten und weiterzubilden. Dazu wird verwiesen einerseits auf die dem Patentanspruch 1 nachgeordneten Patentansprüche, andererseits auf die folgende Beschreibung von Ausfiihrungsbeispielen in Verbindung mit der Zeichnung. In der Zeichnung zeigen
- Fig. 1: eine schematische, im Wesentlichen die funktionalen Wirkzusammenhängen anhand eines Blockschaltbilds verdeutlichende Darstellung einer erfindungsgemäßen Messanordnung und
- Fig. 2: eine schematische Darstellung einer Sensorvorrichtung zur Verwendung in einer Messanordnung gemäß der Fig. 1.

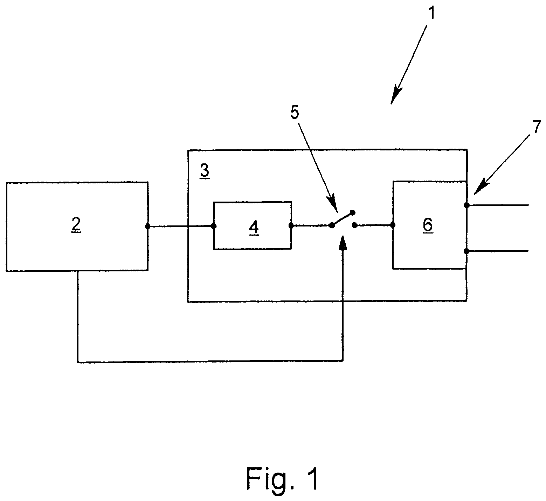

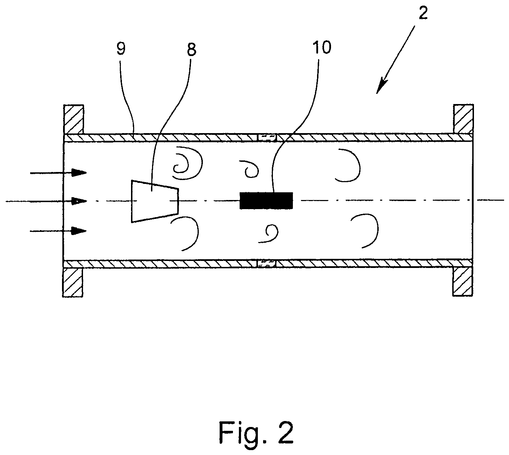

In der Fig. 1 ist ein Ausführungsbeispiel einer Messanordnung 1 dargestellt, wobei die Figur keine Darstellung im Sinne eines korrekten elektrischen Schaltplans ist, sondern vielmehr die Wirkzusammenhänge zwischen den verschiedenen Bestandteilen der Messanordnung 1 erkennbar werden lassen soll. In der Fig. 2 ist ergänzend ein Beispiel für eine Sensorvorrichtung 2 schematisiert dargestellt.

Das Blockschaltbild der Fig. 1 zeigt eine Messanordnung 1 mit einer Sensorvorrichtung 2 und einer Transmittervorrichtung 3. Die Sensorvorrichtung 2 dient der eigentlichen Messung der Messgröße und generiert ausgehend von der Messung ein Messsignal. Dieses Messsignal wird an die Transmittervorrichtung 3 übergeben, die ausgehend davon ein Ausgangssignal erzeugt. Das Ausgangssignal ist beispielsweise davon abhängig, über welche Art von Feldbus oder Ausgabeschnittstelle es kommuniziert wird.

Die Sensorvorrichtung 2 und die Transmittervorrichtung 3 sind hier als eigenständige und beabstandet angeordnete Einheiten dargestellt. Alternativ sind beide Vorrichtungen 2, 3 in einer kompakten Einheit zusammengefasst.

Die dargestellte Messanordnung 1 zeichnet sich insbesondere dadurch aus, dass beim Vorliegen eines Fehlerzustands ein sicherer Zustand eingenommen und zuverlässig ein Fehlersignal erzeugt wird. Dies wird über die Ausgestaltung der Transmittervorrichtung 3 realisiert. Dabei liegt hier der Fokus insbesondere auf sicherheitsrelevanten Bestandteilen oder Komponenten, so dass in der praktischen Umsetzung noch weitere - hier für die Übersichtlichkeit nicht eingezeichnete - Elemente, Bauteile usw. vorhanden sind.

Die Transmittervorrichtung 3 verfügt zumindest über eine Steuervorrichtung 4, eine Schaltervorrichtung 5 und eine Signalausgangseinstellvorrichtung 6, die in Serie geschaltet sind. Die Steuervorrichtung 4 empfängt das Messsignal der Sensorvorrichtung 2 und steuert davon ausgehend die Signalausgangseinstellvorrichtung 6, so dass das passende Ausgangssignal über die Feldbusschnittstelle 7 als eine beispielhafte Ausgestaltung der Schnittstelle ausgegeben wird.

Dabei handelt es sich in dem gezeigten Beispiel um ein 4...20 mA-Signal, das auf eine Zweidrahtleitung ausgegeben wird. Es wird als Ausgangssignal ein Stromsignal erzeugt, dessen Amplitude Auskunft gibt über das Messsignal und insbesondere über einen damit verbundenen Messwert der zu messenden Prozessgröße innerhalb eines gewissen Wertebereichs, dessen Grenzwerte mit 4 mA bzw. 20 mA assoziiert sind. In einer Ausgestaltung sind die Fehlersignale mit Stromwerten kleiner 3,5 mA bzw. größer 22 mA assoziiert. Ein Ausgangssignal mit einem Stromwert kleiner als 4 mA wird dabei im Allgemeinen als Fehlersignal interpretiert. In einer weiteren - hier nicht dargestellten - Ausgestaltung befindet sich hinter einem Ausgang der Steuervorrichtung 4 noch ein Digital-/Analogwandler.

Durch die Signalausgangseinstellvorrichtung 6 wird umgekehrt auch die Energieversorgung der Transmittervorrichtung 3 - oder speziell die der Steuervorrichtung 4 - und dadurch mittelbar die der Sensorvorrichtung 2 realisiert.

Verbunden ist die Steuervorrichtung 4 über eine Schaltervorrichtung 5 mit der Signalausgangseinstellvorrichtung 6. Die Schaltervorrichtung 5 kann dabei zumindest einen ersten und einen zweiten Zustand einnehmen. Für das in der Fig. 1 gezeigte Ausführungsbeispiel ist dabei die Schaltervorrichtung 5 im ersten Zustand geschlossen und im zweiten Zustand geöffnet. Damit geht einher, dass die Steuervorrichtung 4 und die Signalausgangseinstellvorrichtung 6 im ersten Zustand der Schaltervorrichtung 5 über die Schaltervorrichtung 5 miteinander verbunden sind und sie im zweiten Zustand voneinander getrennt sind.

Für den sicheren Übergang in den abgesicherten Zustand ist die Schaltervorrichtung 5 insbesondere derartig ausgestaltet, dass sie dann in den zweiten, d. h. den geöffneten Zustand übergeht, wenn nicht aktiv auf sie eingewirkt wird. Eine solche aktive Einwirkung rührt hier insbesondere von der Sensorvorrichtung 2 her, die aktiv die Schaltervorrichtung 5 im ersten Zustand, also geschlossen hält. Dies führt dazu, dass in dem Fall, dass die Sensorvorrichtung 2 nicht auf die Schaltervorrichtung 5 einwirkt, die Schaltervorrichtung 5 in den zweiten Zustand übergeht, d. h. dass der Schalter geöffnet wird.

Eine solche Schaltervorrichtung 5 wird beispielsweise über einen Transistor realisiert. Ergänzend dazu kann die Sensorvorrichtung 2 jedoch auch die Schaltervorrichtung 2 aktiv zwischen den zwei Zuständen hin- und herschalten. Für eine galvanische Trennung ist in einer - hier nicht gezeigten - Ausgestaltung die Sensorvorrichtung 2 über einen Optokoppler mit der Schaltervorrichtung 5 verbunden.

Ist die Schaltervorrichtung 5 geschlossen - also im ersten Zustand -, so kommuniziert die Steuervorrichtung 4 mit der Signalausgangseinstellvorrichtung 6 und stellt entsprechend das Ausgangssignal ein.

Die Signalausgangseinstellvorrichtung 6 ist derartig ausgestaltet, dass sie erkennt, wenn die Schaltervorrichtung 5 geöffnet ist, und davon ausgehend ein Fehlersignal als Ausgangssignal erzeugt. In einer Ausgestaltung ist dieses Fehlersignal gleich dem, das die Steuervorrichtung 4 einstellt, wenn diese das Vorliegen eines Fehlerzustands erkennt. In einer alternativen Ausgestaltung unterscheiden sich beide Fehlersignale, um auch dadurch die unterschiedlichen Ursachen für das Erzeugen des Fehlersignals zu signalisieren.

Erkennt die Steuervorrichtung 4 einen Fehlerzustand in der Messanordnung 1 oder im zu messenden Prozess, so stellt sie über die Signalausgangseinstellvorrichtung 6 ein Fehlersignal als Ausgangssignal ein. Weiterhin unterbricht sie die Energieversorgung der Sensorvorrichtung 2, wodurch wiederum die Schaltervorrichtung 5 in den zweiten, d. h. geöffneten Zustand übergeht. Dabei lässt sich in Abhängigkeit von den verwendeten Elementen oder Komponenten eine vorgebbare Zeitverzögerung zwischen den Ereignissen einstellen. Die Öffnung der Schaltervorrichtung 5 wiederum führt dazu, dass die Energieversorgung der Steuervorrichtung 4 unterbrochen wird. Damit werden alle sicherheitsrelevanten Bestandteile der Messanordnung 1 in einen Ruhezustand überführt, da die Sensorvorrichtung 2 und die Steuervorrichtung 4 von der Energieversorgung abgeschnitten sind. Die Steuervorrichtung 4 ist dabei in einer Ausgestaltung insbesondere auch die die Transmittervorrichtung 3 steuernde Einheit.

Die Steuervorrichtung 4 ist insbesondere derartig ausgestaltet, dass sie Selbsttests durchführt und die Ergebnisse an die Sensorvorrichtung 2 übermittelt bzw. dass sie das eingestellte Ausgangssignal rückliest und ebenfalls an die Sensorvorrichtung 2 übergibt. Aus diesen Daten (wurde ein zulässiger Test ausgeführt bzw. ist das Ergebnis zulässig bzw. stimmt das rückgelesene Ausgangssignal mit einem abgespeicherten Wert überein usw.) bzw. je nach Ausgestaltung über weitere Informationen ist die Sensorvorrichtung 2 ebenfalls in der Lage zu detektieren, ob ein Fehlerzustand vorliegt. Ist dem der Fall, so wirkt die Sensorvorrichtung 2 auf die Schaltervorrichtung 5 ein und öffnet diese, indem sie sie in den zweiten Zustand überführt oder ggf. nicht mehr im ersten Zustand hält. Dies führt - wie oben besprochen - dazu, dass das Fehlersignal von der Signalausgangseinstellvorrichtung 6 erzeugt und die Steuervorrichtung 4 von der Energieversorgung getrennt wird.

Damit lässt sich das Verhalten der Messanordnung 1 im Fehlerfall wie folgt zusammenfassen: Erkennt die Steuervorrichtung 4 einen Fehlerzustand, so erzeugt sie über die Signalausgangseinstellvorrichtung 6 ein Fehlersignal als Ausgangssignal und unterbricht die Energieversorgung der Sensorvorrichtung 2. Dadurch wird die Schaltervorrichtung 5 nicht mehr geschlossen gehalten und die Energieversorgung der Steuervorrichtung 4 wird unterbrochen. Erkennt alternativ die Sensorvorrichtung 2 einen Fehlerzustand, so öffnet sie die Schaltervorrichtung 5 (direkt durch ein Umschalten oder indirekt durch ein Beenden des Geschlossenhaltens), wodurch die Steuervorrichtung 4 und die daran angeschlossene Sensorvorrichtung 2 von der Energieversorgung abgetrennt werden.

In der Fig. 2 ist ein Vortex-Durchflussmessgerät für fließfähige Medien als Beispiel für eine Sensorvorrichtung 2 dargestellt. Das Messprinzip von Vortex-Durchflussmessgeräten beruht darauf, dass sich in einem flüssigen oder gasförmigen Medium (angedeutet durch die Pfeile) hinter einem Staukörper 8, der von dem Medium in einem Messrohr 9 umströmt wird, eine sog. Kármánsche Wirbelstraße ausbilden kann, die durch sich mit der Strömung fortbewegende, sich vom Staukörper 8 abgelöste Wirbel gebildet ist. Die Frequenz, mit der sich die Wirbel vom Staukörper 8 ablösen, ist von der Strömungsgeschwindigkeit abhängig, wobei dieser Zusammenhang unter gewissen Voraussetzungen nahezu linear ist. Über die Messung der Wirbelfrequenz mit einer Aufnahmeeinheit 10 kann daher die Strömungsgeschwindigkeit des Mediums bestimmt werden, wodurch wiederum - unter zusätzlicher Berücksichtigung von beispielsweise Druck und Temperatur des Mediums - eine Bestimmung des Volumen- und Massedurchflusses möglich ist.

## Patentansprüche

1. Messanordnung (1) zur Bestimmung mindestens einer Messgröße mit mindestens einer Sensorvorrichtung (2) und mindestens einer Transmittervorrichtung (3), wobei die Sensorvorrichtung (2) mindestens ein Messsignal erzeugt und die Transmittervorrichtung (3) mindestens aus dem mindestens einen Messsignal mindestens ein Ausgangssignal erzeugt,
**dadurch gekennzeichnet,**
**dass** die Transmittervorrichtung (3) mindestens eine Steuervorrichtung (4), mindestens eine Schaltervorrichtung (5) und mindestens eine Signalausgangseinstellvorrichtung (6) aufweist, dass die Signalausgangseinstellvorrichtung (6) zur Erzeugung des mindestens einen Ausgangssignals ausgestaltet ist, dass die Schaltervorrichtung (5) derartig ausgestaltet ist, dass sich die Schaltervorrichtung (5) mindestens in einem ersten oder in einem zweiten Zustand befindet, wobei die Schaltervorrichtung (5) derartig ausgestaltet ist, dass sich die Schaltervorrichtung (5) in einem geschlossenen als ersten Zustand oder in einem geöffneten als zweiten Zustand befindet, dass die Steuervorrichtung (4) in dem Fall, dass sich die Schaltervorrichtung (5) in dem ersten Zustand befindet, mit der Signalausgangseinstellvorrichtung (6) verbunden ist, dass die Signalausgangseinstellvorrichtung (6) in dem Fall, dass sich die Schaltervorrichtung (5) in dem zweiten Zustand befindet, mindestens ein Fehlersignal als Ausgangssignal erzeugt, dass die Steuervorrichtung (4) auf die Energieversorgung der Sensorvorrichtung (2) einwirkt, dass die Sensorvorrichtung (2) auf die Schaltervorrichtung (5) einwirkt, dass die Sensorvorrichtung (2) in dem Fall, dass die Sensorvorrichtung (2) mit Energie oberhalb eines vorgebbaren Minimalwerts versorgt ist, die Schaltervorrichtung (5) in dem ersten Zustand hält und dass die Steuervorrichtung (4) in dem Fall, dass die Steuervorrichtung (4) das Vorliegen eines Fehlerzustands erkennt, die Energieversorgung der Sensorvorrichtung (2) unterbricht.

2. Messanordnung (1) nach Anspruch 1, **dadurch gekennzeichnet, dass** die Steuervorrichtung (4) in dem Fall, dass die Steuervorrichtung (4) das Vorliegen eines Fehlerzustands erkennt, über die Signalausgangseinstellvorrichtung (6) ein Fehlersignal als Ausgangssignal erzeugt und die Energieversorgung der Sensorvorrichtung (2) auf einen vorgebbaren Grenzwert herabsetzt.

3. Messanordnung (1) nach Anspruch 1 oder 2, **dadurch gekennzeichnet, dass** die Sensorvorrichtung (2) in dem Fall, dass die Sensorvorrichtung (2) das Vorliegen eines Fehlerzustands erkennt, die Schaltervorrichtung (4) aus dem ersten in den zweiten Zustand versetzt.

4. Messanordnung (1) nach einem der Ansprüche 1 bis 3, **dadurch gekennzeichnet, dass** die Signalausgangseinstellvorrichtung (6) das mindestens eine Ausgangssignal über eine Schnittstelle (7) ausgibt.

5. Messanordnung (1) nach einem der Ansprüche 1 bis 4, **dadurch gekennzeichnet, dass** - insbesondere nur - über die Steuervorrichtung (4) die Energieversorgung der Sensorvorrichtung (2) erfolgt.

6. Messanordnung (1) nach einem der Ansprüche 1 bis 5, **dadurch gekennzeichnet, dass** die Steuervorrichtung (4) das mindestens eine Messsignal der Sensorvorrichtung (2) empfängt und mindestens ausgehend von dem mindestens einen Messsignal über die Signalausgangseinstellvorrichtung (6) die Erzeugung des Ausgangssignals steuert.

7. Messanordnung (1) nach einem der Ansprüche 1 bis 6, **dadurch gekennzeichnet, dass** die Steuervorrichtung (4) mindestens einen Fehlertest durchführt und mindestens ein Ergebnis des mindestens einen Fehlertests an die Sensorvorrichtung (2) übermittelt.

8. Messanordnung (1) nach einem der Ansprüche 1 bis 7, **dadurch gekennzeichnet, dass** die Sensorvorrichtung (2) in dem Fall, dass die Sensorvorrichtung (2) mit Energie versorgt ist, die Schaltervorrichtung (5) im ersten Zustand hält.

## Claims

1. A measuring arrangement (1) for determining at least one measured quantity with at least one sensor device (2) and at least one transmitter device (3), the sensor device (2) generating at least one measurement signal and the transmitter device (3) generating at least one output signal at least from the at least one measurement signal,
**characterized in**
**that** the transmitter device (3) has at least one control device (4), at least one switch device (5) and at least one signal output setting device (6), that the signal output setting device (6) is made to produce at least one output signal, that the switch device (5) is made such that the switch device (5) is at least in a first or in a second state, wherein the switch device (5) is designed in such a manner that the switch device (5) is either in a closed state as first state or in an open state as second state, that the control device (4) is connected to the signal output setting device (6) in the case in which the switch device (5) is in the first state, that the signal output setting device (6) generates at least one fault signal as an output signal in the case in which the switch device (5) is in the second state, that the control device (4) acts on the power supply of the sensor device (2), that the sensor device (2) acts on the switch device (5), that the sensor device (2) keeps the switch device (5) in the first state in the case in which the sensor device (2) is supplied with energy above a definable minimum value and that the control device (4) interrupts the power supply of the sensor device (2) in the case in which the control device (4) recognizes the presence of a fault state.

2. The measuring arrangement (1) according to claim 1, **characterized in that** the control device (4) generates a fault signal as the output signal via the signal output setting device (6) and reduces the power supply of the sensor device (2) to a definable boundary value in the case in which the control device (4) recognizes the presence of a fault state.

3. The measuring arrangement (1) according to claim 1 or 2, **characterized in that** the sensor device (2) shifts the switch device (4) out of the first into the second state in the case in which the sensor device (2) detects the presence of a fault state.

4. The measuring arrangement (1) according to any one of claims 1 to 3, **characterized in that** the signal output setting device (6) outputs the at least one output signal via an interface (7).

5. The measuring arrangement (1) according to any one of claims 1 to 4, **characterized in that** the power supply of the sensor device (2) takes place - especially only - via the control device (4).

6. The measuring arrangement (1) according to any one of claims 1 to 5, **characterized in that** the control device (4) receives the at least one measurement signal of the sensor device (2) and controls the generation of the output signal via the signal output setting device (6) at least based on the at least one measurement signal.

7. The measuring arrangement (1) according to any one of claims 1 to 6, **characterized in that** the control device (4) carries out at least one fault test and transfers at least one result of at least one fault test to the sensor device (2).

8. The measuring arrangement (1) according to any one of claims 1 to 7, **characterized in that** the sensor device (2) keeps the switch device (5) in the first state in the case in which the sensor device (2) is supplied with energy.

## Revendications

1. Système de mesure (1) pour la détermination d'au moins une grandeur de mesure comportant au moins un dispositif capteur (2) et au moins un dispositif émetteur (3), dans lequel le dispositif capteur (2) génère au moins un signal de mesure et le dispositif émetteur (3) génère au moins un signal de sortie au moins à partir l'au moins un signal de mesure, **caractérisé en ce que** le dispositif émetteur (3) comporte au moins un dispositif de commande (4), au moins un dispositif commutateur (5) et au moins un dispositif de réglage de signal de sortie (6), **en ce que** le dispositif de réglage de signal de sortie (6) est conçu pour générer l'au moins un signal de sortie, **en ce que** le dispositif commutateur (5) est conçu de manière à ce que le dispositif commutateur (5) se trouve au moins dans un premier ou dans un deuxième état, dans lequel le dispositif commutateur (5) est conçu de manière à ce que le dispositif commutateur (5) se trouve dans un premier état en tant qu'état fermé ou dans un deuxième état en tant qu'état ouvert, **en ce que**, dans le cas où le dispositif commutateur (5) se trouve dans le premier état, le dispositif de commande (4) est relié au dispositif de réglage de signal de sortie (6), **en ce que**, dans le cas où le dispositif commutateur (5) se trouve dans le deuxième état, le dispositif de réglage de signal de sortie (6) génère au moins un signal d'erreur en tant que signal de sortie, **en ce que** le dispositif de commande (4) agit sur l'alimentation en énergie du dispositif capteur (2), **en ce que** le dispositif capteur (2) agit sur le dispositif commutateur (5), **en ce que**, dans le cas où le dispositif capteur (2) est alimenté en énergie au-dessus d'une valeur minimale pouvant être prédéterminée, le dispositif capteur (2) maintient le dispositif commutateur (5) dans le premier état, et **en ce que**, dans le cas où le dispositif de commande (4) détecte la présence d'un état d'erreur, le dispositif de commande (4) interrompt l'alimentation en énergie du dispositif capteur (2).

2. Système de mesure (1) selon la revendication 1, **caractérisé en ce que**, dans le cas où le dispositif de commande (4) détecte la présence d'un état d'erreur, le dispositif de commande (4) génère un signal d'erreur en tant que signal de sortie par l'intermédiaire du dispositif de réglage de signal de sortie (6) et réduit l'alimentation en énergie du dispositif capteur (2) à une valeur limite pouvant être prédéterminée.

3. Système de mesure (1) selon la revendication 1 ou 2, **caractérisé en ce que**, dans le cas où le dispositif capteur (2) détecte la présence d'un état d'erreur, le dispositif capteur (2) fait passer le dispositif commutateur (4) du premier au deuxième état.

4. Système de mesure (1) selon l'une quelconque des revendications 1 à 3, **caractérisé en ce que** le dispositif de réglage de signal de sortie (6) délivre l'au moins un signal de sortie par l'intermédiaire d'une interface (7).

5. Système de mesure (1) selon l'une quelconque des revendications 1 à 4, **caractérisé en ce que** l'alimentation en énergie du dispositif capteur (2) s'effectue - notamment uniquement - par l'intermédiaire du dispositif de commande (4).

6. Système de mesure (1) selon l'une quelconque des revendications 1 à 5, **caractérisé en ce que** le dispositif de commande (4) reçoit l'au moins un signal de mesure du dispositif capteur (2) et, par l'intermédiaire du dispositif de réglage de signal de sortie (6), commande la génération du signal de sortie au moins à partir de l'au moins un signal de mesure.

7. Système de mesure (1) selon l'une quelconque des revendications 1 à 6, **caractérisé en ce que** le dispositif de commande (4) effectue au moins un test d'erreur et transmet au dispositif capteur (2) au moins un résultat de l'au moins un test d'erreur.

8. Système de mesure (1) selon l'une quelconque des revendications 1 à 7, **caractérisé en ce que**, dans le cas où le dispositif capteur (2) est alimenté en énergie, le dispositif capteur (2) maintient le dispositif commutateur (5) dans le premier état.
